Europäisches Patentamt

(19) European Patent Office

Office européen des brevets

(11) Publication number: **0 146 946**
**A1**

## (12) EUROPEAN PATENT APPLICATION

(21) Application number: **84116046.8**

(22) Date of filing: **21.12.84**

(51) Int. Cl.⁴: **H 01 M 4/24**
**H 01 M 4/30, H 01 M 4/62**

(30) Priority: **28.12.83 FR 8320903**
**26.06.84 FR 8410067**

(43) Date of publication of application:
**03.07.85 Bulletin 85/27**

(84) Designated Contracting States:
**AT BE CH DE GB IT LI LU NL SE**

(71) Applicant: **SOCIETE NATIONALE ELF AQUITAINE**
**Tour Aquitaine**
**F-92400 Courbevoie(FR)**

(71) Applicant: **SORAPEC SA Société de Recherches et**
**d'Applications Electrochimiques**
**192 rue Carnot**
**F-94124 Fontenay-sous-Bois Cédex(FR)**

(72) Inventor: **Bugnet, Bernard**
**13, Rue Guy de Maupassant**
**F-77420 Champs sur Marne(FR)**

(74) Representative: **Boillot, Marc**
**SOCIETE NATIONALE ELF AQUITAINE Département**
**Propriété Industrielle Tour Aquitaine - Cedex No 4**
**F-92080 Paris la Défense(FR)**

(54) Iron electrode and a process for its manufacture.

(57) An iron electrode comprised of an active substance introduced into a substrate. The active substance is a fine iron powder, the particles of which are at least partially covered with a permeable and porous copper deposit. The active substance is introduced by kneading into a porous conductor structure. Also a process of manufacturing such an iron electrode.

FIG-1

SOCIETE NATIONALE ELF AQUITAINE ET SORAPEC –
DPI 4700/4700A

IRON ELECTRODE AND A PROCESS FOR ITS MANUFACTURE

The present invention concerns an improved iron electrode for use in electrochemical accumulators. It concerns, in particular, an electrode for use in association with a positive electrode, for example, a nickel electrode, in an accumulator wherein the electrolyte is an alkaline solution.

The principle of negative iron electrodes is per se known and resides in the oxidation reaction of iron metal so as to form an iron hydroxide and generate electrons.

In order to improve the performance of such electrodes, it has long been attempted to promote contact between those substances which must react with one another, as well as to promote the transfer and collection of electrons.

It has also been proposed to construct electrodes from conducting microporous substrates, the pores of which contain the active substance. Such electrodes can take the form of a thin layer deposited throughout the entire thickness of the substrate, fully along its surface, as described in European patent application No. 80401007.2.

However, none of these proposed embodiments have yet provided an iron electrode which offers sufficient performance to develop an accumulator having satisfactory characteristics, particularly with regard to the energy/mass ratio, the power and the energy yield of the accumulator.

The present invention therefore has as its object to produce a novel iron electrode which offers good performance, and in which the electron transfer phenomena is significantly enhanced.

To this end, the present invention concerns an electrode having an active material disposed in the pores of a conducting porous substrate, which is in turn subjected to sintering. In accordance with the present invention, the active substance is a fine iron powder, the particles of which are either totally or partially coated with a permeable and porous copper deposit. The active substance is introduced by kneading into an open-pored, tridimensional, conductive metallic structure. Such a conductive structure can advantageously be a branched structure such as is disclosed in European patent application No. 80401007.2 (published under N° 0022 409).

The resulting iron electrode exhibits the characteristic of having two electron conducting grids. The first conducting grid is a macroscopic grid constituted by the porous substrate. The second conducting grid is a microscopic grid constituted by the copper which coats the iron particles. This second conducting grid provides improved yields for the active substance, and reduced polarization at high discharge rates.

Further in accordance with the present invention, the iron electrode is cadmiated, i.e. partially covered with cadmium.

The grain size of the iron powder is between 1 and 10 microns, and preferably equals about 4 microns. The ratio between the deposited copper mass and the iron mass is between 5 and 15 %, and preferably equals about 10 %. The ratio between the cadmium mass and the iron mass is between 2 and 8 %, and is preferably about 5 %.

The present invention also concerns a process for making such an iron electrode, which generally comprises kneading an iron powder onto a conducting porous substrate, followed by a sintering step. In accordance with the present invention, at least portions of the iron particles are coated with copper, which coating is microporous and permeable, prior to the kneading operation. Such coating of the particles is accomplished by placing the iron powder in suspension in an acid solution, the pH of which is between 4 and 5, and by then adding copper sulfate to the solution. Preferably, the acid solution used is a boric acid solution or a dilute sulfuric acid solution.

The principal advantage of this coating process resides in its development of a microporous copper layer which serves as an ion permeable microscopic grid.

Further in accordance with the present invention, a paste is formed using the coated powder, a binder such as methyl cellulose, and a liquid such as water or alcohol. The resulting mixture is introduced into the porous substrate, dried, compacted and sintered. Generally, the compacting occurs at a pressure between 100 and 1000 bar. However, in a particularly preferred embodiment, this compacting occurs at a pressure under 200 bar to extend the lifespan of the electrode. The resulting iron electrode is then preferably subjected to another stage of the process according to the present invention, which includes a heat treatment under a neutral or reducing atmosphere at a temperature between 650 and 950°C.

Further in accordance with the present invention, before the kneading step, the coated powder is advantageously mixed with a spacing agent, which is removed after sintering by an elimination treatment. The spacing agent is preferably silica or alumina, and the elimination treatment is preferably a chemical process accomplished in a basic bath.

In a preferred embodiment of an electrode produced in accordance with the present invention, alumina is used as the spacing agent and the elimination treatment takes place in a soda bath. In connection with the use of a spacing agent, the compacting operation is preferably performed under a pressure of 250 bar. Preferably, the alumina used is anhydrous.

The use of such an iron electrode is advantageous in increasing the porosity of the active substance from 25 % to 55 %. Thus, the electrolyte (which is generally potash) can move freely in the electrode during its use. A volumetric increase resulting from the iron to iron hydroxide transformation is allowed to take place in the mass and neither disturbs the surface of the electrode nor completely closes the pores. Thus, the use of the active material by the mass increases from 500 Ah/kg (without a spacing agent) up to 650 Ah/kg.

Further in accordance with the present invention, the resulting electrode is advantageously subjected to a cadmiating operation by precipitation of a cadmium salt, followed by electrochemical reduction. This operation serves to reduce the autodischarge of the electrode by increasing the Faraday yields of charge, by increasing the hydrogen overpotential.

The present invention and its advantages will be better understood by a reading of the following description, given as a non-limiting illustration, with reference to the appended drawings in which :

- Figure 1 is a partial view of an electrode according to the present invention,

- Figure 2 is a sectional view of the conducting substrate,
- Figures 3, 4 and 5 are discharge graphs representing the developed voltage as a function of time for an accumulator incorporating an electrode according to the present invention, and
- Figure 6 is a graph representing the electrode's capacity as a function of the number of operating cycles, for different spacing agents.

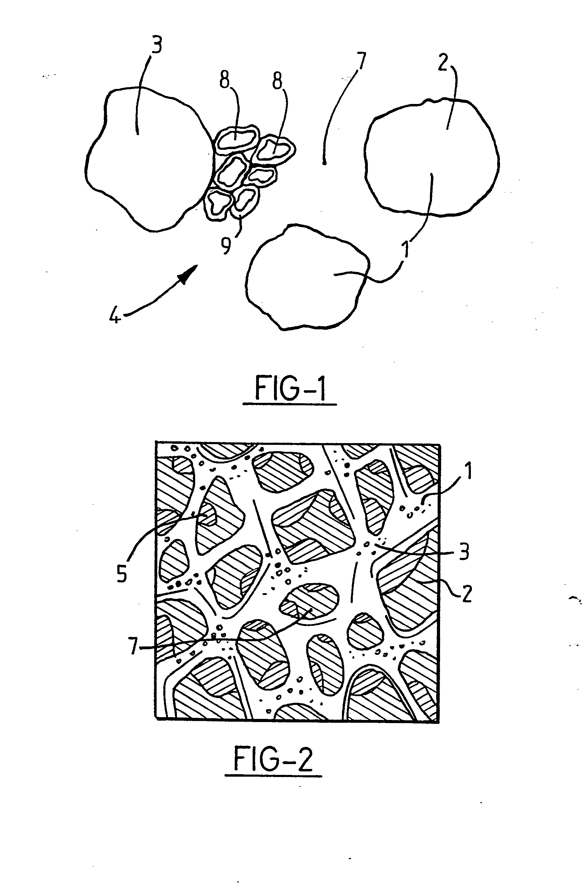

Figure 1 represents a portion of an iron electrode produced in accordance with the present invention. The electrode shown generally incorporates a branched structure of copper as is more specifically represented in Figure 2, and which comprises fibers 1, 2, 3 which combine to develop a honeycomb grid 4. The fibers 1, 2, 3 of the grid 4 combine to define a series of pores 7. The average dimension of the resulting mesh 5 is about 0.75 mm. The thickness of the fibers 1, 2, 3 is about 30 microns.

Within the pores 7, the active material is present in the form of fine particles 8 of iron, having a grain size of about 4 microns. Each iron particle is surrounded by a thin layer of copper 9. The resulting particles are placed in partial contact with one another by the successive effects of kneading, compacting and sintering, as will be more fully described below, and are preferably at least partly coated with cadmium.

The manufacture of such an electrode proceeds in the following manner.

The conductor structure (or branched structure) is produced according to one of the processes disclosed in European patent application No. 80401007.2, the subject matter of wich is incorporated by reference as if fully set forth herein. The surface density of this structure is equal to about 50 mg/cm².

Furthermore, the active substance (iron powder) is prepared from an iron powder obtained by the reduction of carbonyl iron, such that the powder exhibits a low grain size and a large specific surface. The particles of the powder are then subjected to a coating and agglomeration stage, with the copper. To this end, the powder is put into suspension in an acid solution (e.g, boric acid), the pH of which is adjusted to between 4 and 5. The necessary quantity of copper sulfate is then added by progressively supplying a copper sulfate solution of 100 g/l until there is obtained a deposited weight of copper of about 5 to 15 % by weight with respect to the iron. This step serves to develop a microporous and discontinous copper film which is ion permeable.

The coated powder is then dried, and a paste is made of this powder, ethyl alcohol and methyl cellulose. The paste is then introduced by kneading into the conductor structure, dried, and compacted under a presure of about 200 bar. Such compacting can also be carried out at other pressures between 100 and 1000 bar, in appropriate cases. The iron electrode thus obtained is thereafter subjected to a heat treatment ; sintering in a neutral or reducing atmosphere at a temperature between 650 and 950°C, and preferably at about 800°C. The methyl cellulose contained in the paste, which serves as a binder during the first step in manufacturing the electrode, is eliminated during this heat treatment.

After sintering, the electrode is first dipped into a cadmium salt solution, the concentration of which is appropriate to cause about 5 % by weight of cadmium to become fixed in the pores of the electrode, then dried and thereafter immersed in a potassium hydroxide solution to precipitate the cadmium in the form of a hydroxide. The cadmium is then electrochemically reduced. The weight of the cadmium added is preferably about 6 mg/cm², or about 5 % by weight of the active substance. The addition of cadmium, by increasing the hydrogen overpotential, serves to increase the yields of charge to values close to 80 % at state C/2 (total discharge in 2 hours) or at state C/5 (total discharge in 5 hours).

The electrode thus obtained exhibits good performance, developing a mass capacity of about 350 Ah/kg. The performance of this electrode has been analysed in the following manner.

An electrode of 50 cm² was placed between two nickel electrodes of the type disclosed in European patent application No. 80401007.2. The resulting accumulator has the following properties :

- surface density of the copper support ... 50 mg/cm²
- weight of the active substance ........ 100 mg/cm²
- capacity at state C/5 .............. 2.3 ampere/hour
(Ah) at 25°C

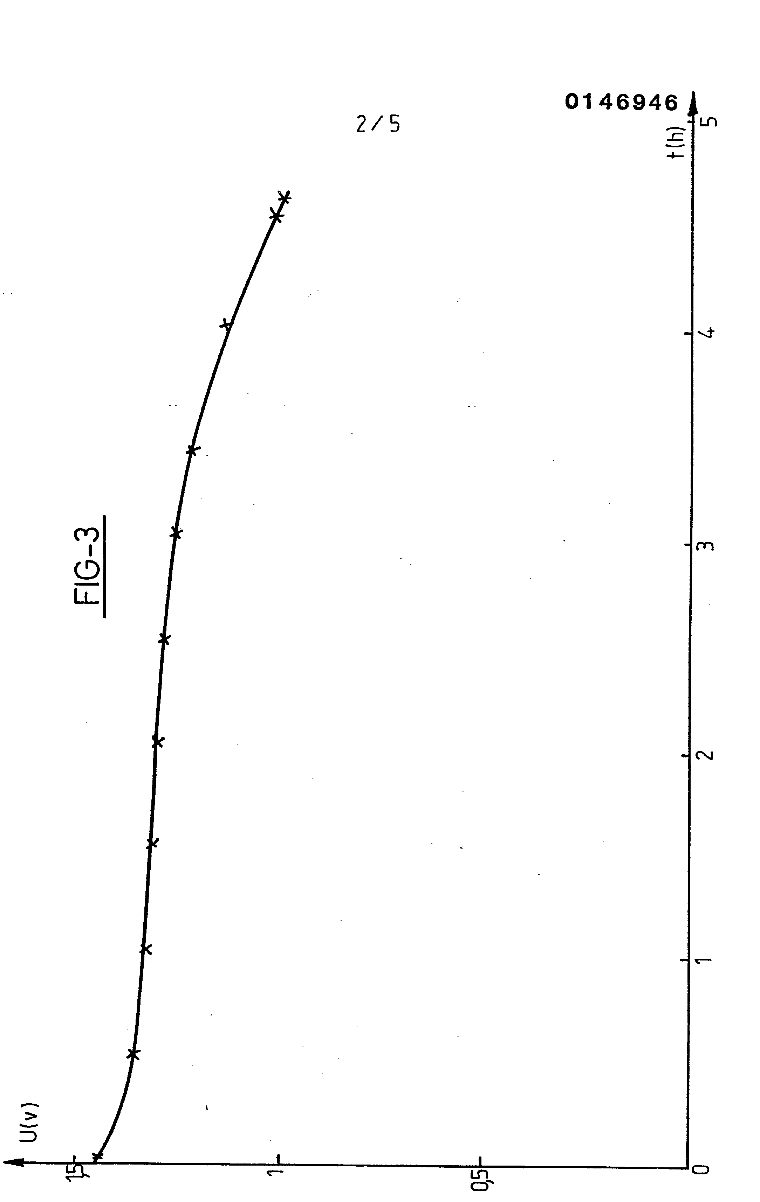

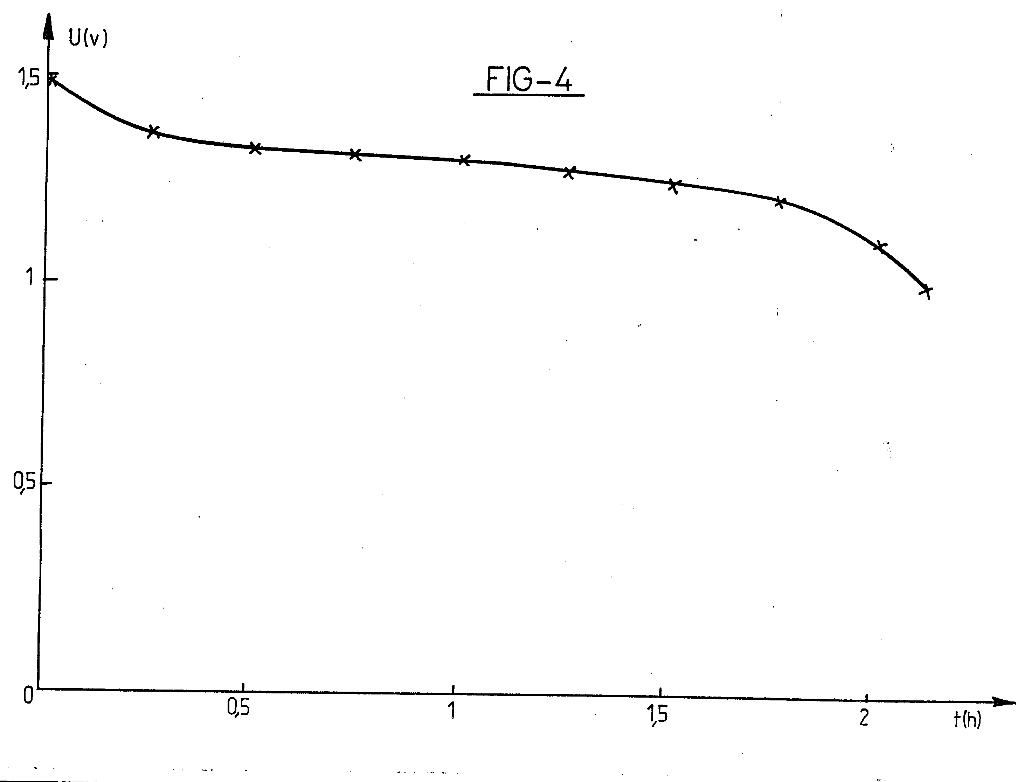

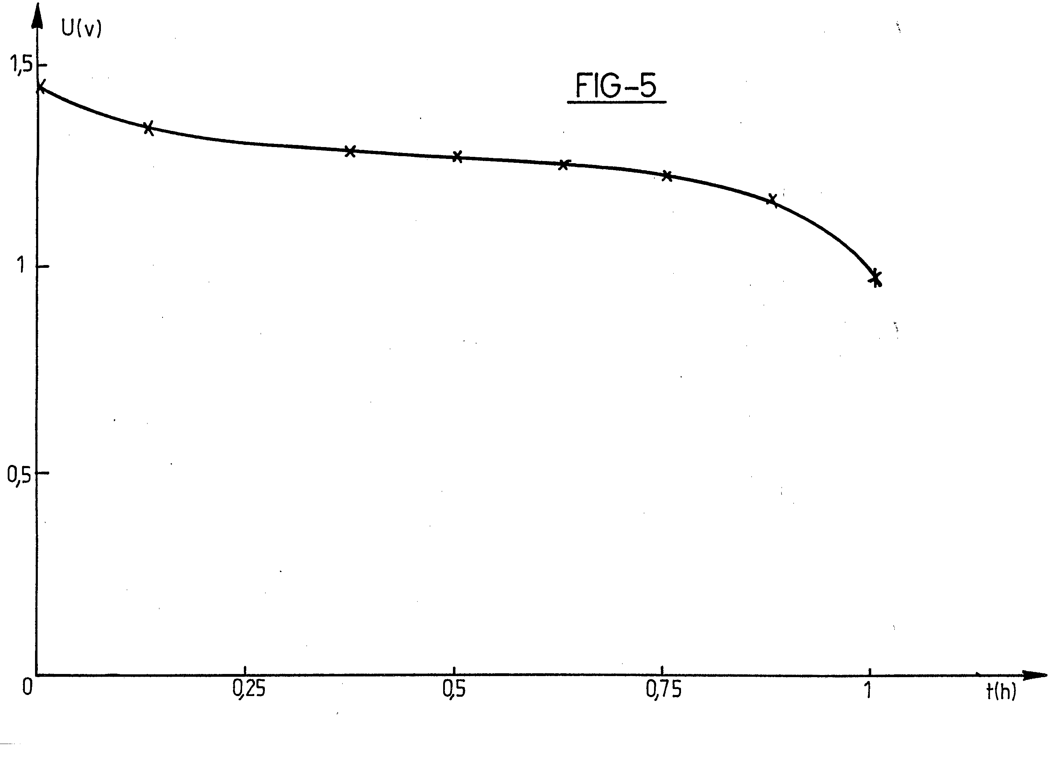

Graphs of the output voltage developed during discharge of the resulting accumulator at 25°C are shown in the drawings for three discharge rates including 0.5 A (about C/5) in Figure 3, 1 A (about 0.4 C) in Figure 4, and 2 A (about C) in Figure 5. These graphs show the display of a quasi-constant voltage of about 1.3 V during 80 % of the discharge, for each of the three discharge states illustrated. The mass energy of such an accumulator varies from 75 Wh/kg at 25°C to 45 Wh/kg at -25°C, passing 60 Wh/kg at 0°C, each of these measurements being made for a discharge rate of C/5. For high power and short duration requirements, these tests have shown that the currents developed can reach, for a 50 cm² electrode surface, 20 Amperes at 25°C, 10 Amperes at 0°C and 7.5 Amperes at -25°C.

In manufacturing such electrodes, it is particularly preferable to dry the coated powder obtained from the coating process, and to make a paste using this powder, ethyl alcohol, methyl cellulose and anhydrous or hydrated alumina, the weight of which is about 40 % by weight of the iron powder. The mixture is introduced into the branched structure by kneading, and is then compacted under a pressure of about 250 bar. The iron electrode is thereafter subjected to a heat treatment of sintering, under a neutral or reducing atmosphere and at about 850°C. The resulting structure is then subjected to an elimination step in order to eliminate the spacing agent. To this end, the electrode is immersed in a soda bath, the concentration of which is about 800 g/l, at 130°C, for about 2.5 hrs. To be noted is that the thickness of the paste layer is completely controllable during the kneading operation, since the apparent paste volume is greater than without a spacing agent. Thus, a very homogeneous compacting and a perfect regularity of the thickness of the electrode is obtained.

This electrode has also been used in association with two nickel electrodes, with the resulting assembly then dipped in a 6N potash electrolyte, in order to make an accumulator. For the first discharge, a capacity of 40 mAh/cm² was obtained. The capacity tends to become optimal and steady from the 8 th cycle and thereafter. The same experiment was done with an electrode comprising 10 % of alumina by weight. A capacity of 20 mAh/cm² was obtained for the first cycle. With 60 % of alumina by weight, a capacity of 65 mAh/cm² was obtained from the first cycle. With 30 % of alumina by weight, a capacity of 30 mAh/cm² was obtained from the first cycle, and 60 mAh/cm² from the 10 th cycle and thereafter.

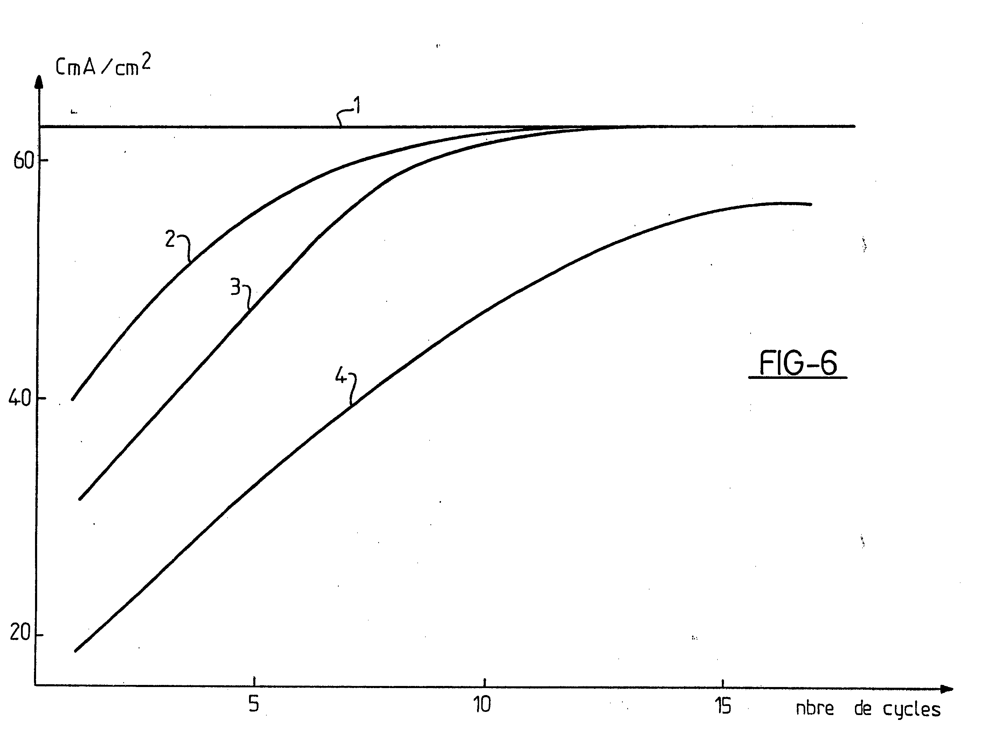

Figure 6 illustrates these results in representing the developed capacity of the electrode as a function of cycles and for different alumina contents, with :

- curve 1 = 60 %
- curve 2 = 40 %
- curve 3 = 30 %
- curve 4 = 10 %

It is to be noted that for the three curves 1, 2, 3 a stationary capacity of about 60 mAh/cm² is very quickly obtained.

To manufacture an electrode according to the present invention, an alumina content of more than 30 % is preferably chosen. However, for reasons of mechanical behavior, particularly due to porosity, an alumina content of less than 40 % is generally chosen.

The present invention is not limited to the embodiments described herein-above, but rather includes all variants thereof.

## CLAIMS

1 - An iron electrode comprised of an active material introduced into a substrate, wherein the active material is comprised of a fine iron powder, at least portions of the particles of which are coated with a permeable and porous deposit of copper, which is kneaded into a porous tridimensionally branched metallic conductor structure.

2 - An iron electrode according to claim 1, wherein said iron powder has a grain size of between 1 and 10 microns.

3 - An iron electrode according to claim 1, wherein the particles are partially coated with cadmium.

4 - An iron electrode according to claim 3, wherein the ratio between the cadmium mass and the iron mass is between 2 and 8 %.

5 - An iron electrode according to claim 4, wherein said ratio is about 5 %.

6 - An iron electrode according to claim 1, wherein the ratio between the copper mass and the iron mass is between 5 and 15 %.

7 - An iron electrode according to claim 6, wherein said ratio is about 10 %.

8 - An iron electrode according to claim 1, wherein the kneaded structure is compacted.

9 - An iron electrode according to claim 8, wherein the compacted structure is sintered.

10 - An iron electrode according to claim 1, wherein said conductor structure develops a macroscopic electron conducting grid, and said copper deposit develops a microscopic electron conducting grid.

11 - An iron electrode according to claim 1, wherein a paste is kneaded into said conductor structure, said paste comprising said coated iron particles, a binder and a liquid.

12 - An iron electrode according to claim 11, wherein said binder is methyl cellulose.

13 - An iron electrode according to claim 11, wherein said liquid is water or alcohol.

14 - An iron electrode according to claim 1, wherein a spacing agent is mixed in the iron powder.

15 - An iron electrode according to claim 14, wherein said spacing agent is silica or alumina.

16 - An iron electrode according to claim 14, wherein said spacing agent is anhydrous alumina.

17 - An iron electrode according to claim 16, wherein the content of said alumina is between 30 and 40 % by weight of the iron powder.

18 - A process for manufacturing an iron electrode, comprising :

    providing an iron powder and a conducting substrate ;

    placing the iron powder in an acid solution having a pH between 4 and 5 and progressively adding a copper salt to said solution to develop a permeable and porous copper deposit on at least portions of said iron powder, thereby poviding an active substance for said electrode ;

kneading the active substance into said substrate ;

drying the substrate with the active substance kneaded therein ;

compacting said dried substrate ; and

heat treating said compacted substrate.

19 - A process according to claim 18, wherein said active substance is kneaded into a tridimensionally branched metallic conductor structure.

20 - A process according to claim 18, wherein said acid solution is boric acid or dilute sulfuric acid.

21 - A process according to claim 18, wherein said iron powder is introduced into the metallic structure as a paste comprised of copper coated iron particles, a binder and a liquid.

22 - A process according to claim 21, wherein said binder is methyl cellulose.

23 - A process according to claim 21, wherein said liquid is water or alcohol.

24 - A process according to claim 18, wherein said compacting takes place under a pressure of between 100 and 1000 bar.

25 - A process according to claim 24, wherein said pressure is about 200 bar.

26 - A process according to claim 18, wherein said heat treatment is sintering.

27 - A process according to claim 26, wherein said sintering is performed under a neutral or reducing atmosphere, at a temperatue of between 650 and 950°C.

28 - A process according to claim 27, wherein said sintering is performed at a temperature of about 800°C.

29 - A process according to claim 18, wherein, after said heat treatment step, said electrode is provided with a cadmium deposit.

30 - A process according to claim 29, wherein said deposit is developed by precipitating cadmium from a cadmium salt.

31 - A process according to claim 18, wherein, before the kneading step, the coated powder is mixed with a spacing agent.

32 - A process according to claim 31, wherein said spacing agent is eliminated after said heat treatment by an elimination treatment.

33 - A process according to claim 32, wherein said elimination treatment takes place in a basic bath.

34 - A process according to claim 32, wherein said spacing agent is alumina, and said elimination treatment is a chemical one.

35 - A process according to claim 31, wherein the spacing agent is silica or alumina.

36 - A process according to claim 31, wherein said spacing agent is anhydrous alumina.

37 - A process according to claim 31, wherein said compacting operation takes place under a pressure of about 250 bars.

38 - A process according to claim 31, wherein the spacing agent is added at a rate of 10 to 60 % by weight of the iron powder.

39 - A process according to claim 38, wherein the spacing agent is added at a rate of 30 to 40 % by weight of the iron powder.

FIG-1

FIG-2

FIG-3

2 / 5

0146946

FIG-4

3/5

0146946

FIG-5

4/5

0146946

FIG-6

0146946

. Application number

EP 84 11 6046

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 347 790 (VARTA)<br><br>* Claim 6; page 3, line 23 - page 4, line 2 * | 1,2,8, 9,11-14,18, 19,22, 23,26-28,31, 32 | H 01 M 4/24<br>H 01 M 4/30<br>H 01 M 4/62 |
| Y | US-A-3 260 576 (H. GRUENE et al.)<br><br>* Example 1 * | 1,2,8, 9,11-14,18, 19,22, 23,26-28,31, 32 | |
| Y | PATENTS ABSTRACTS OF JAPAN, vol. 4, no. 148 (E-30)[630], October 18, 1980; & JP - A - 55 100 663 (YUASA DENCHI K.K.) 31-07-1980<br>* The whole abstract *<br><br>--- -/- | 1,9,18 ,19,26 ,27 | TECHNICAL FIELDS SEARCHED (Int. Cl.4)<br><br>H 01 M 4/24<br>H 01 M 4/26<br>H 01 M 4/52<br>H 01 M 4/30<br>H 01 M 4/02<br>H 01 M 4/04<br>H 01 M 4/00 |

The present search report has been drawn up for all claims

| Place of search | Date of completion of the search | Examiner |
|---|---|---|
| THE HAGUE | 27-03-1985 | D'HONDT J.W. |

0146946
. Application number

European Patent
Office

**EUROPEAN SEARCH REPORT**

EP   84 11 6046

Page   2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | JOURNAL OF THE ELECTROCHEMICAL SOCIETY, vol. 129, no. 6, June 1982, pages 1173-1180, Manchester, New Hampshire, US; C.S. TONG et al.: "A study of the iron electrode structure of Ni-Fe cell" * Page 1174, right-hand column, last paragraph, table III, IV, VI, VII; pages 1177,1178,1179 * | 1,8,9, 11-14, 18,21- 28,31, 38,39 | |
| | --- | | |
| A | US-A-3 305 401 (S.O. AULIN) * Claims 1,4,6; column 2, lines 42-54 * | 1 | |
| | --- | | |
| A | FR-E- 41 344 (I.G. FARBENINDUSTRIE AG) * Claims 1,2; page 1, lines 30-37; page 2, lines 27-46 * | 3,4,29 ,30 | |
| | --- | | TECHNICAL FIELDS SEARCHED (Int. Cl.4) |
| A | FR-A- 374 597 (NYA ACKUMULATOR AKTIEBOLAGET JUNGNER) * Claims 1,2; page 1, lines 34-50; page 2, lines 2-4 * | 1,6-8, 11,13, 18,21, 23 | |
| | --- | | |
| A | FR-A-1 012 554 (BUREAU TECHNIQUE GAUTRAT) * Claim 1; page 1, right-hand column, paragraph 7; page 2, left-hand column, paragraph 1 * | 6,7 | |
| | ---                    -/- | | |

The present search report has been drawn up for all claims

| Place of search THE HAGUE | Date of completion of the search 27-03-1985 | Examiner D'HONDT J.W. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82

**European Patent Office**

**EUROPEAN SEARCH REPORT**

## DOCUMENTS CONSIDERED TO BE RELEVANT

Page 3

| Category | Citation of document with indication. where appropriate, of relevant passages | Relevant to claim | CLASSIFICATION OF THE APPLICATION (Int. Cl.4) |
|---|---|---|---|
| A | FR-A-2 392 506 (WESTINGHOUSE ELECTRIC CORP.) * Claims 1,2; page 5, lines 9-16; figure 2; page 6, lines 6-24 * | 1 | |
| A | CHEMICAL ABSTRACTS, vol. 93, no. 24, 15 December 1980, page 151, abstract 223126s, Columbus, Ohio, US; & JP - A - 80 83 164 (MATSUSHITA ELECTRIC INDUSTRIAL CO., LTD.) 23-06-1980 * The whole abstract * | 1,9,11 ,12,18 ,22,26 -28 | |
| A | CHEMICAL ABSTRACTS, vol. 95, no. 26, December 1981, page 195, abstract 222967w, Columbus, Ohio, US; & JP - A - 81 36 783 (JAPAN STORAGE BATTERY CO. LTD.) 26-08-1981 | 14,31, 32 | |
| A | CHEMICAL ABSTRACTS, vol. 96, no. 16, April 19, 1982, page 268, abstract 126934h, Columbus, Ohio, US; Y. SUZUKI et al.: "Some aspects on porous properties of iron oxides containing foreign oxides reduced by hydrogen", & Metall. Trans., B 1981, 12B(4), 691-7 | | TECHNICAL FIELDS SEARCHED (Int. Cl.4) |
| A | FR-A-2 248 618 (BATTELLE) | | |
| | --- -/- | | |

The present search report has been drawn up for all claims

| Place of search THE HAGUE | Date of completion of the search 27-03-1985 | Examiner D'HONDT J.W. |
|---|---|---|

EPO Form 1503. 03.82

| | DOCUMENTS CONSIDERED TO BE RELEVANT | | Page 4 |

| Category | Citation of document with indication, where appropriate, of relevant passages | Relevant to claim | CLASSIFICATION OF THE APPLICATION (Int. Cl.4) |
|---|---|---|---|
| A | FR-A-1 080 578  (S.A.F.T.) | | |
| | | | |
| | | | |
| | | | **TECHNICAL FIELDS SEARCHED (Int. Cl.4)** |
| | | | |

The present search report has been drawn up for all claims

| Place of search | Date of completion of the search | Examiner |
|---|---|---|
| THE HAGUE | 27-03-1985 | D'HONDT J.W. |